Europäisches Patentamt

(19) European Patent Office

Office européen des brevets

(11) Publication number : **0 290 397 B1**

# EUROPEAN PATENT SPECIFICATION

(45) Date of publication of patent specification :
**01.04.92 Bulletin 92/14**

(51) Int. Cl.⁵ : **G01N 15/06,** G01N 27/74, // F16N29/00

(21) Application number : **88830071.2**

(22) Date of filing : **26.02.88**

(54) Sensor for detecting the ferromagnetic-particle content of a fluid.

(30) Priority : **06.03.87 IT 6716587**

(43) Date of publication of application :
**09.11.88 Bulletin 88/45**

(45) Publication of the grant of the patent :
**01.04.92 Bulletin 92/14**

(84) Designated Contracting States :
**DE ES FR GB**

(56) References cited :
**EP-A- 0 116 468**
**FR-A- 2 508 168**
**GB-A- 2 029 580**
**US-A- 3 373 352**

(73) Proprietor : **IVECO FIAT S.p.A.**
**Via Puglia 35**
**I-10156 Torino (IT)**

(72) Inventor : **Montuschi, Mario**
**Via Onorato Vigliani 35/5**
**I-10135 Torino (IT)**
Inventor : **Incardona, Mario**
**Corso Torino, 3/C**
**I-10095 Grugliasco (Torino) (IT)**

(74) Representative : **Bosotti, Luciano et al**
**c/o Jacobacci-Casetta & Perani S.p.A. Via Alfieri, 17**
**I-10121 Torino (IT)**

## Description

The present invention relates to sensors for detecting the ferromagnetic-particle content of a fluid.

The present invention has been developed with particular attention to its possible use in detecting the content of ferromagnetic wear particles in the lubricating fluid or fluids used in a mechanical propulsion system (engine, gear change, rear axle, etc.) of a motor vehicle.

Sensors (usually defined as "chip detectors") are already known, particularly in the aeronautical industry, which consist of permanent magnets which can capture the ferromagnetic particles suspended in a fluid until they cause the closure of an electrical circuit and the emission of a corresponding alarm signal. In this connection reference can be made, for example, to sensors produced by the United States Company, Technical Development Co. (TEDECO).

These sensors, however, have the disadvantage that they supply an all-or-nothing type of indication, which is therefore not directly proportional to the quantity of ferromagnetic particles present in the fluid.

Another problem which arises is that of cleaning the sensor, that is, the periodic removal of the ferromagnetic particles which gather on it during detection.

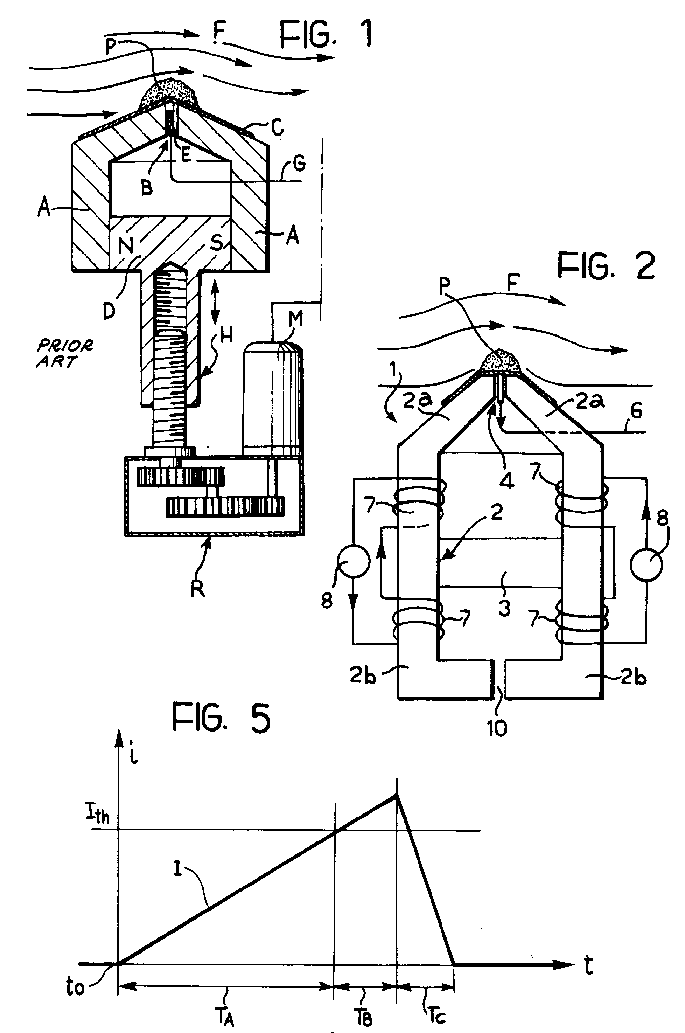

For this purpose, a sensor of known type, available as CDM/FP/00 from. Gabriel Microwave Systems Limited, as shown schematically in Figure 1, includes a magnetic circuit of generally C-shaped configuration with two curved arms A. The arms A converge towards each other to define a gap B which is protected by a shield C of non-magnetic material and exposed to the flow F of a fluid containing the suspended ferromagnetic particles whose presence it is wished to detect. A permanent magnet D polarises the magnetic circuit so as to attract the particles, which accumulate adjacent the gap B to an extent proportional to the magnitude of their presence. A probe E, usually a Hall-effect probe, is inserted in the gap B to detect variations in the field, or magnetic flux, induced in the gap B by the accumulation of particles P on the face of the shield C exposed to the fluid F. The probe E outputs on a respective line G, a signal proportional to the content of particles P in the fluid F.

In order periodically to regenerate or clean the sensor, that is to remove the particles P which have collected on it during detection, the permanent magnet D is moved away from the arms or yokes A in the direction indicated by the arrow in Figure 1 by a worm-screw drive unit H driven by an electric motor M through a reduction gear R.

This solution, whilst being satisfactory as regards the accuracy of detection, is bulky ( particularly because of the electromechanical unit for moving the magnet D), and is therefore quite expensive to produce. This expense is such as to make it rather difficult to use such a sensor in current motor-vehicle models, in accordance with a solution which is the subject of another patent application for industrial invention filed on the same date by the same Applicant.

It may also be observed that, in the sensor of Figure 1, the use of the electromechanical unit H, R, M for moving the magnet D is not the best solution from the point of view of reliability of use in a critical working environment. In current use, even when the manet D is moved away from the arms A, a certain level of magnetism in the gap B is still noted. This magnetism opposes detachment of the particles P during the cleaning of the sensor.

More specifically, the present invention aims to produce a sensor of the type specified above, that is a sensor according to the introduction to Claim 1 which is known, eg. from GB-A-2029 520, which, whilst retaining all the advantages of known solutions (and particularly of the solution illustrated in Figure 1) does not give rise to the disadvantages described and allows a smaller sensor, with a particularly simple structure, to be produced.

According to the present invention, this object is achieved by a sensor of the type specified, having the further features set forth in the characterising portion of Claim 1. In such a sensor the principal magnetic circuit and the auxiliary magnetic circuit are integrated in one structure which has a configuration which is generally H-shaped, with a central arm consisting of a permanent magnet and two pairs of side arms on which at least one electrical induction coils is wound. The arms of one of the two pairs converge towards each other to form the gap in which the detection probe is inserted. The arms of the other pair have at least one movable part which allows the intensity of the magnetic field in the gap to be regulated precisely. In order to clean or regenerate the sensor, the supplying of the induction coils is effected slowly, the energising current being increased along a gradient over a period of the order of one minute. Thus, when the field in the gap is cancelled out, the ferromagnetic particles accumulated adjacent it detach easily, even in the presence of residual magnetism in the magnetic structure which can thus be made even from a material which is not of particularly good quality.

The invention will now be described, purely by way of non-limiting example, with reference to the appended drawings in which:

Figure 1, relating to a prior-art sensor, has already been described above,

Figure 2 illustrates the principal structure of a sensor according to the invention,

Figure 3 is a first axial section of a sensor according to the invention,

Figure 4 is a section taken on the line IV-IV of Figure 3, and

Figure 5 illustrates schematically the variations in an induction current used in the sensor according to the invention.

The sensor according to the invention, generally indicated 1, is intended to be used in an arrangement substantially the same as that described above with reference to the sensor of Figure 1.

Again in this case, the sensor faces, with the interposition of a protective shield of non-magnetic material, a conduit in which flows a fluid F containing suspended particles P of ferromagnetic material the content of which is to be detected.

The sensor 1 consists essentially of two arms or yokes 2 which, together with a permanent magnet 3, form a structure with a generally H-shaped configuration.

This structure can be seen to comprise:
– a central arm, consisting of the permanent magnet 3, and
– two pairs of lateral arms 2a and 2b consisting of the homologous, facing ends of the arms or yokes 2 which project generally-symmetrically on the two sides of the magnet 3.

The arms 2a of the first pair, which are those intended to be presented to the fluid F containing the particles P, converge towards each other to define a gap 4. In an arrangement substantially the same as that illustrated in Figure 1, a probe 5 is inserted in the gap 4. The probe 5 usually consists of a Hall-effect probe which supplies its detection signal through an output line 6 connected to measuring equipment (not illustrated).

The unit formed by the permanent magnet 3 and the first two arms 2a, in accordance with the terminology adopted in the Claims which follow, constitutes a principal magnetic circuit structurally the same as that formed by the yokes A and the permanent magnet D of Figure 1.

Four electrical-energisation coils, wound on the four lateral arms 2a, 2b of the H-shaped structure described above, are indicated 7. The coils 7 are intended to be connected to an electrical power supply (generator), schematically illustrated in Figure 2 in the form of two current generators 8.

This purely schematic representation is in no way limiting and has been selected solely for this purpose of showing how the direction of winding, as well as the direction of the supply to the coils 7 wound on the arms 2, is selected in such a way that, when the source or sources 8 are activated, the coils 7 induce a magnetic field, and thus a flux within the arms 2 which is opposed to that induced by the permanent magnet 3, whilst a field and thus a flux in the same direction as that induced by the permanent magnet 3 is generated within the arms 2b.

In particular, it is possible to reduce the field and the magnetic flux within the gap 4 in which the probe is situated to zero (and even to invert it) by increasing the intensity of the current supplied to the energising coils 7.

The structure of the arms 2 and the arrangement of the coils 7 allows this result to be obtained by causing variations in the magnetic field and the flux only in the arms 2 and not in the central member 3. Thus it does not result in demagnetisation of the permanent magnet 3.

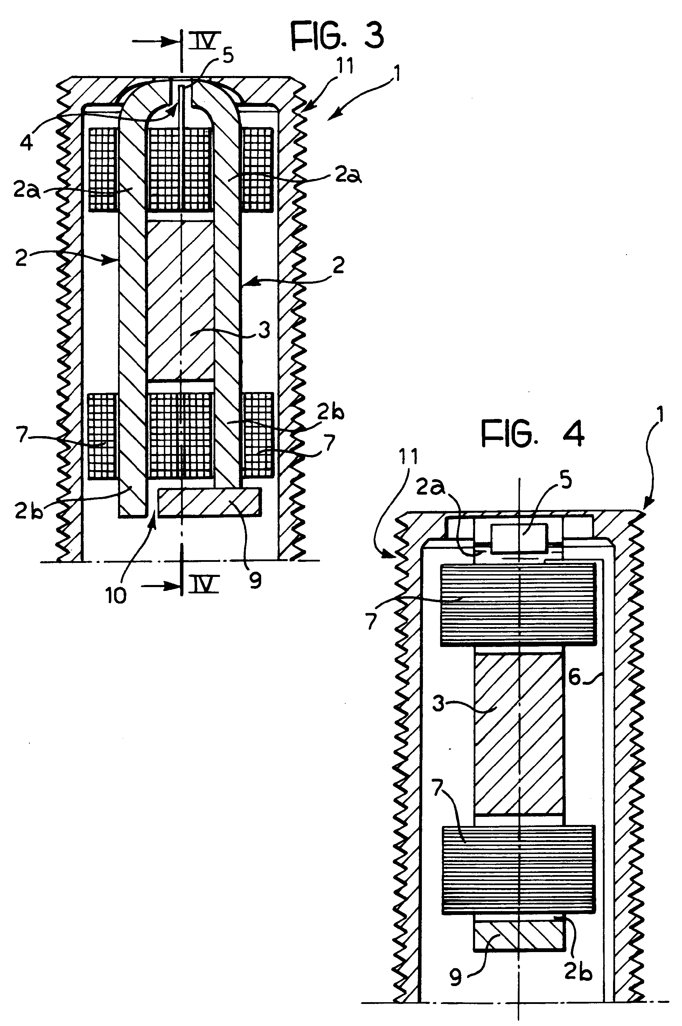

In more general terms, the unit formed by the lateral arms 2b and the coils 7 constitutes, according to the terminology adopted in the Claims which follow, an auxiliary magnetic circuit integrated with the principal magnetic circuit referred to above. The coils 7, when energised, are able to produce a magnetic field in the principal magnetic circuit, opposed to that generated by the permanent magnet 3 until the magnetic field and flux present in the gap 4 are cancelled out. Preferably, at least one of the two arms 2b opposite the gap 4 has (see the section of Figure 3) a movable part 9 whose position can be adjusted selectively, during the setting-up of the sensor, so as to vary correspondingly the dimensions of a further gap 10 defined between the lateral arms 2b. In this way, therefore, the sensor can be calibrated to ensure precise symmetry of the fluxes in the arms 2, when the coils are not supplied with current.

Preferably, as illustrated in Figures 3 and 4, the sensor 1 is inserted in a protective cover 11 of non-magnetic material (for example brass) whose top wall facing the free ends of the lateral arms 2a constitutes the shield C for protecting the gap 4.

The graph of Figure 5 illustrates schematically, as a function of the time t, the typical variations in the current I which is applied to the energising coils 7 during the cleaning or regeneration of the sensor 1.

One generally starts from an initial situation ($t_o \equiv$ normal operating conditions of the sensor 1 during detection) in which the current provided by the supplies 8 is nil. In these conditions, the magnetic field or flux present in the gap 4 is at a maximum.

The current I is then increased gradually, corresponding to a generally-sloping trace, over a period of the order of approximately 1 minute.

In general, two portions can be distinguished in the rising slope of the current I, corresponding to a first interval $T_A$, in which the current I remains below a threshold level $I_{th}$ corresponding to the cancelling out of the magnetic field and flux within the gap 4, and a second interval $T_B$, in which the current I increases further to cause inversion of the field and flux in the gap 4.

Since the current I increases slowly whilst the sensor is being cleaned, causing a corresponding gradual reduction in the magnetic field in the gap 4, the particles P which have accumulated on the sensor detach easily when the condition is reached in which the field and the flux are cancelled out; any residual magnetism in the magnetic structure of the sensor can then be cancelled out by allowing the current to increase beyond the threshold value $I_{th}$. It is therefore not necessary to use materials of particularly good quality to produce this structure.

In the interval $T_B$ the current I is increased again until the probe 5 detects the inversion of the flux and thus the inversion of the residual magnetism. At this point, the cleaning operation having been completed, the current I is slowly brought to zero (interval $T_C$ of Figure 5), re-establishing the initial operating conditions of the sensor.

The maximum value reached by the current I can be of the order of tenths of 1 ampere.

A sensor has therefore been described for detecting the ferromagnetic particle content of a fluid, in which the sensor can be cleaned of particles accumulated on it by a static method (without using movable parts) with a particularly simple and reliable structure. The cleaning is carried out without altering the magnetic flux in the permanent magnet 3, and therefore without demagnetising it. The cleaning is effected by the application of a cleaning current which grows fairly slowly, so that there is always a sufficiently long period of time during which the magnetic field or flux in the gap of the sensor is small enough to cause detachment of the particles P. This phenomenon is achieved independently of the presence of permanent magnetism in the structure of the sensor.

## Claims

1. A sensor for detecting the ferromagnetic-particle (P) content of a fluid (F), comprising:
   – a principal magnetic circuit (2a) polarized by a permanent magnet (3) and having a gap (4) intended to be exposed to the fluid (F) to cause the particles (P) to accumulate adjacent the gap (4),
   – a probe (5) sensitive to variations in the magnetic field produced in the gap (4) by the accumulation of the particles (P) and able to produce a detection signal (6) indicative of the variations and proportional to the content of particles (P) in the fluid (F), and
   – an auxiliary magnetic circuit (2b, 7) characterised in that said auxiliary magnetic circuit (2b, 7) is provided with at least one electrical induction coil (7), able to produce a magnetic field in the principal magnetic circuit (2a) opposing the magnetic field generated by the permanent magnet (3) until the magnetic field in the gap (4) is cancelled out to cause detechment of the particles (P) accumulated adjacent the gap (4) and in that the principal magnetic circuit and the auxiliary magnetic circuit are integrated in a structure (2, 3) having a generally H-shaped configuration with a central member (3) and two pairs (2a, 2b) of lateral arms, in which the permanent magnet (3) occupies the central member.

2. A sensor according to Claims 1, characterised in that electrical induction coils (7) are provided on at least two of the lateral arms (2a, 2b) of the pairs.

3. A sensor according to Claim 1, characterised in that electrical induction coils (7) are provided on all the lateral arms of the two pairs (2a, 2b).

4. A sensor according to any one of Claims 1 to 3, characterised in that the arms of one (2a) of the said two pairs converge towards each other to form the gap (4), whilst the arms of the other (2b) of the said two pairs also form a further gap (10) of selectively adjustable width (9).

5. A sensor according to any of Claims 1 to 4, characterised in that it further includes a general containment casing (11) of non-ferromagnetic material defining a protective shield for the gap (4).

6. A sensor according to any of Claims 1 to 5, characterised in that at least one electrical induction coil (7) carries associated supply means (8) able to cause the magnetic field opposed to the magnetic field generated by the permanent magnet (3) to increase gradually in the gap (4).

7. A sensor according to Claim 1 or Claim 6, characterised in that the at least one electrical induction coil (7) carries associated supply means (8) able to cause the magnetic field opposed to the magnetic field generated by the permanent magnet (3) to increase until an inversion ($T_B$) of the magnetic field in the gap (4) is produced.

8. A sensor according to any one of Claims 1 to 7, characterised in that the probe is a Hall-effect probe interposed in the gap (4).

## Patentansprüche

1. Sensor zum Detektieren des Gehalts an ferromagnetischen Partikeln (P) in einem Fluid (F),
   mit einem Hauptmagnetkreis (2a), der durch einen Permanentmagneten (3) polarisiert ist und einen Luftspalt (4) besitzt, der dem Fluid (F) ausgesetzt werden kann, um die Partikel (P) zu veranlassen, sich in der Nähe des Luftspalts (4) zu sammeln,
   mit einem Meßfühler (5), der auf durch die Ansammlung der Partikel (P) verursachten Änderungen des in dem Luftspalt (4) erzeugten Magnetfeld anspricht und ein für diese Änderungen kennzeichnendes, dem Gehalt an Partikeln (P) in dem Fluid (F) proportionales Detektorsignal (6) erzeugen kann, sowie mit einem Hilfsmagnetkreis (2b, 7), **dadurch gekennzeichnet,** daß der Hilfsmagnetkreis (2b, 7) mit wenigstens einer elektrischen Induktionsspule (7) ausgestattet ist, die in dem Hauptmagnetkreis (2a) ein Magnetfeld erzeugen kann, das dem von Permanentmagneten (3) erzeugten Magnetfeld entgegenwirkt, bis das Magnetfeld in dem Luftspalt (4) verschwindet, um ein Ablösen der in der Nähe des Luftspalts (4) angesammelten Partikel (P) zu bewirken,

und daß der Hauptmagnetkreis und der Hilfsmagnetkreis in einer Struktur (2, 3) integriert sind, die eine im wesentlichen H-förmige Konfiguration mit einem zentralen Glied (3) und zwei Paaren (2a, 2b) von Seitenarmen besitzt, in der der Permanentmagnet (3) das zentrale Glied besetzt.

2. Sensor nach Anspruch 1, dadurch gekennzeichnet, daß auf wenigstens zwei der Seitenarme (2a, 2b) der genannten Paare elektrische Induktionsspulen (7) angeordnet sind.

3. Sensor nach Anspruch 1, dadurch gekennzeichnet, daß auf allen Seitenarmen der beiden genannten Paare (2a, 2b) elektrische Induktionsspulen (7) angeordnet sind.

4. Sensor nach einem der Anprüche 1 bis 3, dadurch gekennzeichnet, daß die Arme eines (2a) der beiden Paare zur Bildung des Luftspalts (4) gegeneinander konvergieren, während die Arme des anderen (2b) der beiden Paare einen weiteren Luftspalt (10) mit selektiv einstellbarer Breite (9) bilden.

5. Sensor nach einem der Anprüche 1 bis 4, dadurch gekennzeichnet, daß weiterhin ein Gehäuse (11) aus einem nichtferromagnetischen Werkstoff vorgesehen ist, das eine schützende Abschirmung für den Luftspalt (4) bildet.

6. Sensor nach einem der Anprüche 1 bis 5, dadurch gekennzeichnet, daß wenigstens einer elektrischen Induktionsspule (7) eine versorgungseinrichtung (8) zugeordnet ist, mittels derer das magnetfeld, das dem von dem Permanentmagneten (3) erzeugten Magnetfeld entgegenwirkt, allmählich in dem Luftspalt (4) vergrößert werden kann.

7. Sensor nach einem der Anprüche 1 bis 6, dadurch gekennzeichnet, daß wenigstens einer elektrischen Induktionsspule (7) eine Versorgungseinrichtung zugeordnet ist, mittels derer das Magnetfeld, das dem von dem Permanentmagneten (3) erzeugten Magnetfeld entgegenwirkt, vergrößert werden kann, bis eine Umkehrung ($T_B$) des Magnetfeldes in dem Luftspalt (4) erzeugt wird.

8. Sensor nach einem der Anprüche 1 bis 7, dadurch gekennzeichnet, daß der Meßfühler ein in den Luftspalt (4) eingesetzter Halleffekt-Fühler ist.

## Revendications

1. Capteur pour détecter la teneur en particules ferromagnétiques (P) d'un fluide (F), comportant :
   – un circuit magnétique principal (2a) polarisé par un aimant permanent (3) et comprenant un entrefer (4) prévu pour être exposé au fluide (F) entraînant l'accumulation de particules (P) au voisinage de l'entrefer (4),
   – une sonde (5) sensible aux variations du champ magnétique produit dans l'entrefer (4) par l'accumulation des particules (P) et capable de produire un signal de détection (6) indicateur des variations et proportionnel à la teneur en particules (P) du fluide (F), et
   – un circuit magnétique auxiliaire (2b, 7), caractérisé en ce que ledit circuit magnétique auxiliaire (2b, 7) comporte au moins un enroulement à induction électrique (7) capable de produire un champ magnétique dans le circuit magnétique principal (2a) opposé au champ magnétique produit par l'aimant permanent (3) jusqu'à l'annulation du champ magnétique dans l'entrefer (4) afin de détacher les particules (P) accumulées au voisinage de l'entrefer (4), et en ce que le circuit magnétique principal et le circuit magnétique auxiliaire sont intégrés dans une structure (2, 3) ayant généralement une configuration en forme de H avec un corps central (3) et deux paires (2a, 2b) de bras latéraux et dans laquelle l'aimant permanent (3) occupe le corps central.

2. Capteur selon la revendication 1, caractérisé en ce que les enroulements à induction électrique (7) sont prévus sur au moins deux des bras latéraux (2a, 2b) desdites paires.

3. Capteur selon la revendication 1, caractérisé en ce que les enroulements à induction électrique (7) sont prévus sur tous les bras latéraux des deux paires (2a, 2b).

4. Capteur selon l'une quelconque des revendications 1 à 3, caractérisé en ce que les bras de l'une (2a) desdites deux paires convergent l'un vers l'autre pour former un entrefer (4) alors que les bras de l'autre (2b) desdites deux paires forment aussi un autre entrefer (10) de largeur (9) réglable de façon sélective.

5. Capteur selon l'une quelconque des revendications 1 à 4, caractérisé en ce qu'il comporte en outre un boîtier (11) constituant généralement une enceinte en matériau non ferromagnétique qui définit un écran protecteur pour l'entrefer (4).

6. Capteur selon l'une quelconque des revendications 1 à 5, caractérisé en ce que au moins un enroulement à induction électrique (7) comprend un moyen d'alimentation associé (8) qui est capable de créer un champ magnétique opposé au champ magnétique produit par l'aimant permanent (3) et qui augmente graduellement dans l'entrefer (4).

7. Capteur selon la revendication 1 ou la revendication 6, caractérisé en ce que au moins un enroulement à induction électrique (7) porte un moyen d'alimentation associé (8) qui est capable de produire un champ magnétique opposé au champ magnétique produit par l'aimant permanent (3) et qui augmente jusqu'à produire un champ magnétique inverse ($T_B$) dans l'entrefer (4).

8. Capteur selon l'une quelconque des revendications 1 à 7, caractérisé en ce que la sonde est une sonde à effet de Hall interposée dans l'entrefer (4).

EP 0 290 397 B1

FIG. 1

PRIOR ART

FIG. 2

FIG. 5

6

# FIG. 3

# FIG. 4